(19)

Europäisches Patentamt
European Patent Office
Office européen des brevets

(11) **EP 4 482 083 A1**

(12) **EUROPEAN PATENT APPLICATION**

(43) Date of publication:
**25.12.2024 Bulletin 2024/52**

(21) Application number: **23181196.9**

(22) Date of filing: **23.06.2023**

(51) International Patent Classification (IPC):
***H04L 9/40*** *(2022.01)*

(52) Cooperative Patent Classification (CPC):
**H04L 63/1491**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **British Telecommunications public
limited company
London E1 8EE (GB)**

(72) Inventor: **The designation of the inventor has not
yet been filed**

(74) Representative: **British Telecommunications
public limited company
Intellectual Property Department
9th Floor
One Braham
Braham Street
London E1 8EE (GB)**

(54) **CYBER DEFENCE DECEPTION EFFECTIVENESS METRICS**

(57)    A computer implemented method of deploying a cyber defence deception strategy in a computer network, the method comprising: receiving a list of network devices in the computer network that require deception; receiving at least one deception constraint; generating a plurality of candidate deception strategies based on the list of network devices and the at least one deception constraint; calculating a deception effectiveness score for each candidate deception strategy; selecting an optimal deception strategy from the plurality of candidate deception strategies based on the calculated deception effectiveness scores; and deploying the optimal deception strategy in the computer network.

Fig. 8

EP 4 482 083 A1

**Description**

The present invention relates to a method of deploying a cyber defence deception strategy.

Deception relates to manipulating an attacker's beliefs to mislead their decision making, i.e. inducing the attacker to act sub-optimally so as to delay their attack and save the assets. Deception technology typically implements traps to monitor the suspicious activities in an attack chain and provide an understanding of the attacker's behaviour and intentions.

The present invention accordingly provides, in a first aspect, a computer implemented method of deploying a cyber defence deception strategy in a computer network, the method comprising: receiving a list of network devices in the computer network that require deception; receiving at least one deception constraint; generating a plurality of candidate deception strategies based on the list of network devices and the at least one deception constraint; calculating a deception effectiveness score for each candidate deception strategy; selecting an optimal deception strategy from the plurality of candidate deception strategies based on the calculated deception effectiveness scores; and deploying the optimal deception strategy in the computer network.

Preferably the deception effectiveness score is based on a concealability measure, a detectability measure, and a deterrence measure.

Preferably the deception effectiveness score is a weighted sum of the concealability measure, the detectability measure, and the deterrence measure.

Preferably the deception constraint comprises an indication of computing resources available for implementing the deception strategy.

Preferably each candidate deception strategy comprises a list of deception artefacts comprising at least one decoy, breadcrumb, bait and/or lure.

Preferably the decoy is at least one of a server, workstation, application, printer, IoT/OT/ICS, network service, mailbox, and/or AD forest.

Preferably the breadcrumb is at least one of registry entries, files and folders, memory credentials, browser history, mapped drive, and/or a credential store.

Preferably the bait is at least one of: beaconing documents, database rows, ransomware, files and folders, DNS records, processes, directory browsing, tainted tools, fake AV, and/or listeners.

Preferably the lure is based on at least one of vulnerability, misconfigurations, default/weak credentials, weak permission, registration in catalogues such as AD and/or entity names.

The present invention accordingly provides, in a second aspect, a computer system including a processor and memory storing computer program code for performing the steps of the method set out above.

The present invention accordingly provides, in a third aspect, a computer program element comprising computer program code to, when loaded into a computer system and executed thereon, cause the computer to perform the steps of the method set out above.

Embodiments of the present invention will now be described, by way of example only, with reference to the accompanying drawings, in which:

Figure 1 is a flow diagram of an exemplary computer architecture suitable for the operation of embodiments of the present invention.

Figure 2 is a flow diagram of an exemplary architecture for providing deployment of deception artefacts according to embodiments of the present invention.

Figure 3 is a block diagram of how decoy repositories are implemented alongside real depositories according to embodiments of the present invention.

Figure 4 is a deception effectiveness calculation table according to embodiments of the present invention.

Figure 5 is a first exemplary set of calculations of the deception effectiveness score according to embodiments of the present invention.

Figures 6a and 6b are a second exemplary set of calculations of the deception effectiveness score according to embodiments of the present invention.

Figure 7 is a third exemplary set of calculations of the deceptive effectiveness score according to embodiments of the present invention.

Figure 8 is a flow diagram of a method of deploying cyber defence according to embodiments of the present invention.

Figure 9 is a flow diagram of an alternative method of deploying cyber defence according to embodiments of the present invention.

Cyber defensive deception (CDD) includes a range of techniques which can be used to mislead and deceive an attacker. CDD is able to protect an organization's important data by deploying deception technologies including decoys, breadcrumbs, baits and/or lure.

Decoys are IT assets that either use real licensed operating system software or are emulations of real devices. Some examples of decoys include servers, workstations, applications, printers, IoT/OT/ICS, network services, mailboxes, and active directory (AD) forests.

Breadcrumbs are deception assets deployed onto the real IT asset devices and used to divert/lead to decoys. Some examples of breadcrumbs include registry entries, files and folders, memory credentials, browser history, mapped drive, and/or a credential store.

Baits are deception assets used as host tripwires. Some examples of baits include beaconing documents, database rows, ransomware, files and folders, DNS records, processes, directory browsing, tainted tools, fake AV, and/or listeners.

Lures are deception assets to make traps (such as decoys, breadcrumbs, and baits) attractive for attackers. Some examples of lures include vulnerability, misconfigurations, default/weak credentials, weak permission, registration in catalogues such as AD forests and/or entity names.

There are various CDD techniques that can be used to mislead and/or deceive an attacker. Some examples of CDD techniques are: "deceptive attack graphs" which make use of graph representations to lead attackers to follow a rogue attack path in order to distract the attacker from their intended target; "deceptive simulation" which enables the monitoring of a network topology and the creation of false attack targets in order to deceive the attacker; "deceptive topology" which distorts network topology through traffic forging in order to delay the attacker; "decoy services" which facilitate the defender to share fake protocol messages, respond delays and create error messages in order to delay the attacker; "utilizing honeypots" which are built to intentionally expose vulnerable resources to attackers by emulating or simulating systems such as databases, servers and/or file systems, and services such as authentications; "Honeytokens" that utilize any of honeywords, honeyaccount, honeyfile and honeypath, which represent decoy passwords, user accounts, files and vulnerabilities, respectively; "moving target defence (MTD)" which is an asymmetric solution that operates by continually or iteratively moving an attack surface of protected systems through dynamic shifting, which can be controlled and managed by an administrator; "network tarpit" which focuses on "sticky" connections with the aim of slowing or stalling automated network scanning in order to the confuse the attacker, wherein tarpits are used to monitor unallocated IP space for unauthorized network activity; "operating system (OS) obfuscation" which projects a mimic of the network behaviour of fake operating systems in order to deceive attackers; "traffic forcing" which increases the traffic flow in the network to slow down the attacker's actions. In order to implement any of these deception techniques, at least one of the deceptive technologies (i.e. decoys, breadcrumbs, baits and lure) are utilized.

The present invention exploits data anonymization methods to calculate deception effectiveness. Data anonymization refers to a type of information sanitization whose intent is privacy protection. In some examples, data anonymization strategies include any of k-anonymity, l-diversity and/or t-closeness strategies. By calculating values for breadcrumbs, baits and lure, an efficient number of deceptive artefacts can be deployed. This has the technical effect of optimizing the computational resources, such as memory and processing power, required to provide/deploy effective cyber defence deception whilst maintaining sufficiently effective deception measures.

The k-anonymity strategy is an attempt at solving the problem of producing a release of data with scientific guarantees the subjects of that data cannot be re-identified while the data remain practically useful. A release of data has k-anonymity if the information for each subject in the release cannot be distinguished from at least k - 1 subjects whose information also appears in the release. The l-diversity strategy is a form of group-based anonymization that is used to preserve privacy in data sets by reducing the granularity of a data representation. An equivalence class is said to have l-diversity if there are at least l "well-represented" values for the sensitive attribute. A table is said to have l-diversity if every equivalence class of the table has l-diversity. The t-closeness strategy is a further refinement of l-diversity group-based anonymization that is used to preserve privacy in data sets by reducing the granularity of a data representation. This reduction is a trade-off that can result in loss of effectiveness of data management or data mining algorithms in order to gain privacy. The t-closeness model extends the l-diversity model by treating the values of an attribute distinctly by taking into account the distribution of data values for that attribute. An equivalence class is said to have t-closeness if the distance between the distribution of a sensitive attribute in this class and the distribution of the attribute in the whole table is no more than a threshold t. A table is said to have t-closeness if all equivalence classes have t-closeness.

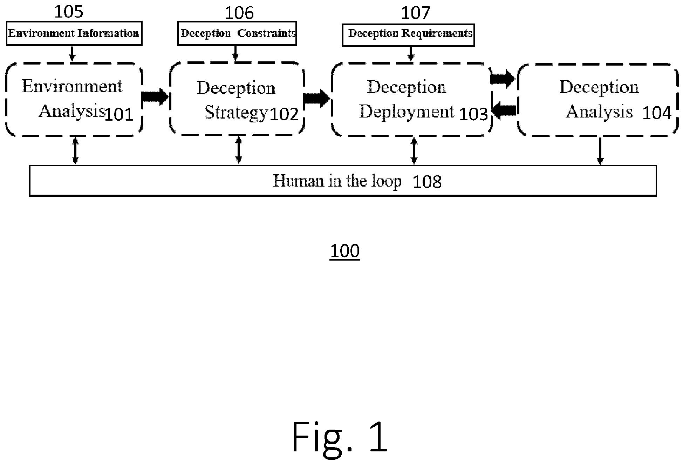

Figure 1 is a block diagram of an exemplary computer architecture 100 comprising four modules 101-104 that are configured individually.

An environment analysis module 101 is associated with the environment information 105 provided as input by a user so as to facilitate the design of deception strategy. The environment analysis explore the environment information 105 as input by the user(s) in a variety of ways, including segregating the information in useful blocks, extracting the vulnerabilities/risks could be exploited by an attacker, and/or categorise devices in groups.

A deception strategy module 102 is responsible for designing the deception strategy based on input from environmental analysis module 101. In some examples, the deception strategy module 102 additionally designs the deception strategy on the basis of the deception constraints 106. Deception constraints may include memory size, limiting computational performance, accessibility and/or permission controls. There are several possible deception strategies that can be employed, such as resolving the vulnerabilities detected and informed by the environment analysis module 101 or ranking the device groups. Another possible deception strategy, and the subject of the present invention, is calculating the number of deception artefacts needed to enhance the environment security. In some examples, a deception effectiveness metric is utilised by the deception strategy module 102.

A deception deployment module 103 creates and deploys the deception artefacts, based on the deception strategy.

A deception analysis module 104 evaluates the deception deployment module 103 so that any required improvements are recorded. For example, if a breadcrumb is used to redirect the communication to a new machine, then the deception deployment module 103 will check if the traffic is flowing as modified.

In some examples, there is a human in the loop 108 that operates to verify the result of each module and perform the changes/updates if required. In some examples, the human in the loop 108 is not a human user, but instead a model programmed to verify the results of each module. The human in the loop / model 108 may verify the result/solution of each module by a variety of methods, including: populating a database by users or organization data and/or previous recording to check the generated reactions by each module, matching the threats to reduce false positives, and/or confirming the deception artefacts and connections.

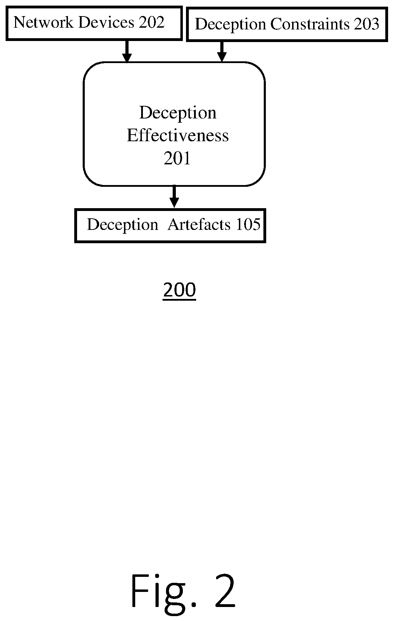

Figure 2 shows how the Deception Effectiveness module 201 sits within a module of a Deception strategy module 102/200. Information relating to the Network Devices 202 and Deception Constraints 203 are provided to a Deception Effectiveness module 201. The output are the number and/or types of deception artefacts, and the deployment is performed by the deception deployment module.

Along with decoys, two additional or alternative deception strategies are: (i) a host comprises a set of data repositories R which comprises a subset of real data repositories $R_r$ and a subset of decoy repositories $R_d$. A decoy repository comprises a honeytoken account or session tokens, (ii) within each real repository $r \in R_r$ there is a set of data entries E which each comprise user credential(s) and session key(s). For each data entry E within a real repository there is a set of real data entries $E_r$ and honeytoken entries $E_h$ (which is a type of breadcrumb) deployed which will provide credentials for session tokens directing the attacker towards a decoy system.

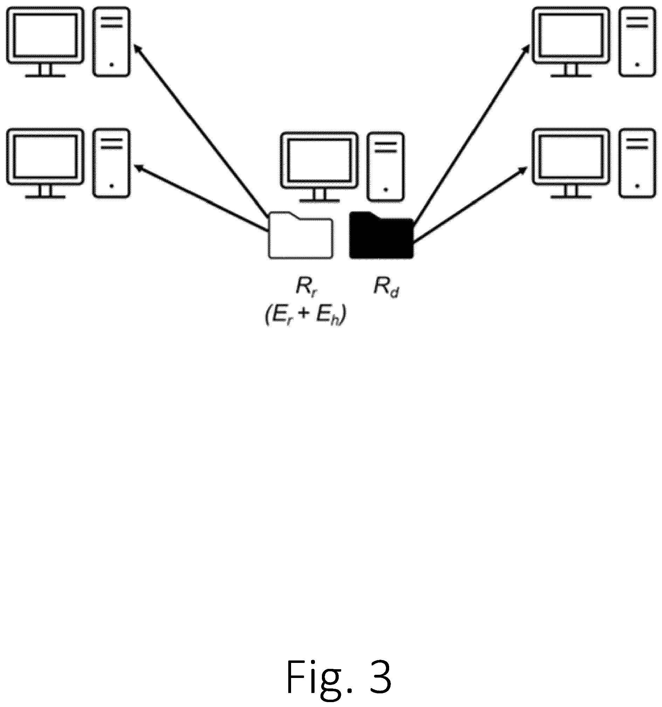

An exemplary deployment of decoy repositories and honeytoken entries shown in Fig. 3 where decoy files or honeytoken entries provide breadcrumbs that direct the attacker towards a honeypot. In this example there is a single decoy repository $R_d$ which comprises breadcrumbs leading to decoy hosts and a single real repository $R_r$. The real repository comprises a real data entry $E_r$ (e.g. a user credential or session token) and a honeytoken entry $E_h$.

The deception effectiveness (DE) metric is defined as follows:

$$DE = \alpha_1.CM + \alpha_2.DM + \alpha_3.TM$$

where $\alpha_1$, $\alpha_2$, and $\alpha_3$, are coefficients which can be adjusted by the requirements to conceal, detect and deter, respectively, an attacker from an asset. The deception effectiveness is calculated with regards to "concealability of genuine assets" (CM), "detectability measure of attackers" (DM), and "deterrence measure for attackers to reach target" (TM). The concealability measure (CM) relates to the likelihood that an attacker will fail to identify their target, i.e., the probability the attacker fails to compromise a real host. CM is based on the probability that the attacker attacks a decoy asset based on k-anonymity. decoy repositories and/or honeytoken entries in real repositories on real assets. Therefore, the CM is defined as follows:

$$CM = 1 - \sum_{j=1}^{k} \left(\frac{1}{k}\right).\left(\frac{1}{R_{r_j} + R_{d_j}} \sum_{i \in R_{r_j}} \frac{E_{r_i}}{E_{r_i} + E_{h_i}}\right)$$

where $\left(\frac{1}{k}\right)$ is the probability that the attacker accesses a genuine asset, $\left(\frac{1}{R_{r_j}+R_{d_j}}\right)$ is the probability that the attacker uses a repository on asset j and $\sum_{i \in R_{r_j}} \frac{E_{r_i}}{E_{r_i}+E_{h_i}}$ is the probability that the attacker accesses a genuine user credential or session token rather than a honeytoken.

The detectability measure (DM) relates to the likelihood that the attacker is detected regardless of their success, i.e. the probability an attacker will be detected either through interaction with a decoy assert or through the access or use of decoy information. The DM is given by:

$$DM = \left(\frac{1}{k}\right)\left(\sum_{j=1}^{k}\left(\frac{R_{d_j}}{R_{r_j}+R_{d_j}}\right) + \sum_{j=1}^{k}\left(\frac{1}{R_{r_j}+R_{d_j}}\sum_{i \in R_{r_j}}\frac{E_{h_i}}{E_{r_i}+E_{h_i}}\right)\right)$$

where $\left(\frac{1}{k}\right)$ is the probability that the attacker accesses a genuine asset, $\left(\frac{R_{d_j}}{R_{r_j}+R_{d_j}}\right)$ is the probability that the attacker accesses the decoy repository on asset j, $\left(\frac{1}{R_{r_j}+R_{d_j}}\right)$ is the probability that the attacker uses data contained within a repository and $\sum_{i \in R_{r_j}} \frac{E_{h_i}}{E_{r_i}+E_{h_i}}$ is the probability that the attacker accesses the honeytoken rather than a genuine asset.

The deterrence measure (TM) is defined as the number of scan (e.g. round scan) attempts the attacker makes to make the probability of reaching an asset more than a predetermined threshold. A scan attempt refers to when an attacker scans a network to reveal information about host assets. The probability of an attacker hitting an asset is defined may be defined as:

$$TM = 1 - (CM)^n$$

where n is the number of scans performed. Alternatively, n is defined as the number of attack actions. An attack action is used to describe the attacker executing a lateral movement technique using information they have discovered from their activities, e.g. a user password. In an example, if the attacker discovers 10 credentials where 9 are honeytokens, and the attacker uses one at random, there is a 90% probability that the attacker will use a honeytoken in their attack action. Each use of the possible 10 credentials would correspond to an attack action.

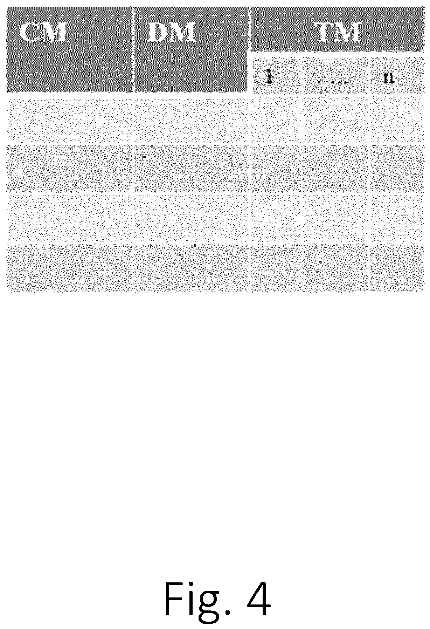

Fig. 4 shows an exemplary Deceptive Effectiveness Calculation Table populated with various values of $R_d$ (decoy repositories), $E_h$ (honey entries) in $R_r$ (genuine repositories) for each real asset in the network based on provided network and deception constraint information. This allows for the selection and deployment of the deception artefacts that provide the preferred deceptive effectiveness.

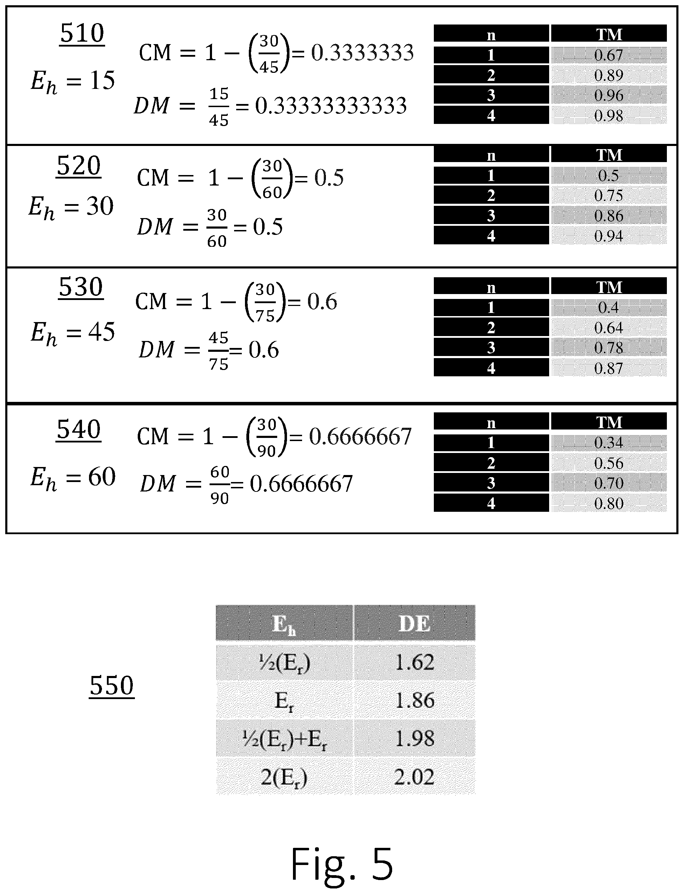

To illustrate how the present invention is implemented, an exemplary way of carrying out the deception effectiveness calculations based on varying $E_h$ is given in Fig. 5. In this example, k = 1, $R_r$ = 1 and $E_r$ = 30. As can be seen in box 510 which shows the example of where $E_h$ = 15, the CM and DM are 0.333333 and 0.3333333333, respectively. For n = 1, the TM is calculated to be as 0.67, and for n=4, the TM is calculated to be as 0.98. As can be seen in box 520 which shows the example of where $E_h$ = 30, the CM and DM are 0.5 and 0.5, respectively. For n = 1, the TM is calculated to be as 0.5, and for n=4, the TM is calculated to be as 0.94. As can be seen in box 530 which shows the example of where $E_h$ = 45, the CM and DM are 0.6 and 0.6, respectively. For n = 1, the TM is calculated to be as 0.4, and for n=4, the TM is calculated to be as 0.87. As can be seen in box 540 which shows the example of where $E_h$ = 60, the CM and DM are 0.6666667 and 0.6666667, respectively. For n = 1, the TM is calculated to be as 0.34, and for n=4, the TM is calculated to be as 0.80.

In table 550, the DE is calculated (where $\alpha_1 = \alpha_2 = \alpha_3 = 1$ and n = 3) in terms of the proportion of $E_h$ relative to the $E_r$. From table 650, it can be seen that the DE increases as the number of $E_h$ increases relative to the $E_r$. However, it can be observed that, for $E_h = \frac{1}{2}(E_r)$, the DE is 1.63, whereas for $E_h = 2(E_r)$, the DE is 1.53. Therefore, in this example, a 4-fold increase in number of honeytoken entries corresponds to approximately 25% increase in DE. Therefore, it is clear that considerably more resources in the form of deception artefacts do not necessarily correspond to proportionally improved deception effectiveness. By making this calculation, it can be ascertained what is a sufficiently effective level of deception given the computation resources available. Therefore, fewer resources can be utilized with a sufficiently high level of deception effectiveness. In some examples, the number of honeytoken entries is limited based on a predetermined target DE. For example, if any asset has memory limitations then only a certain amount (less than or equal to the memory size) of honeytoken entries are deployed.

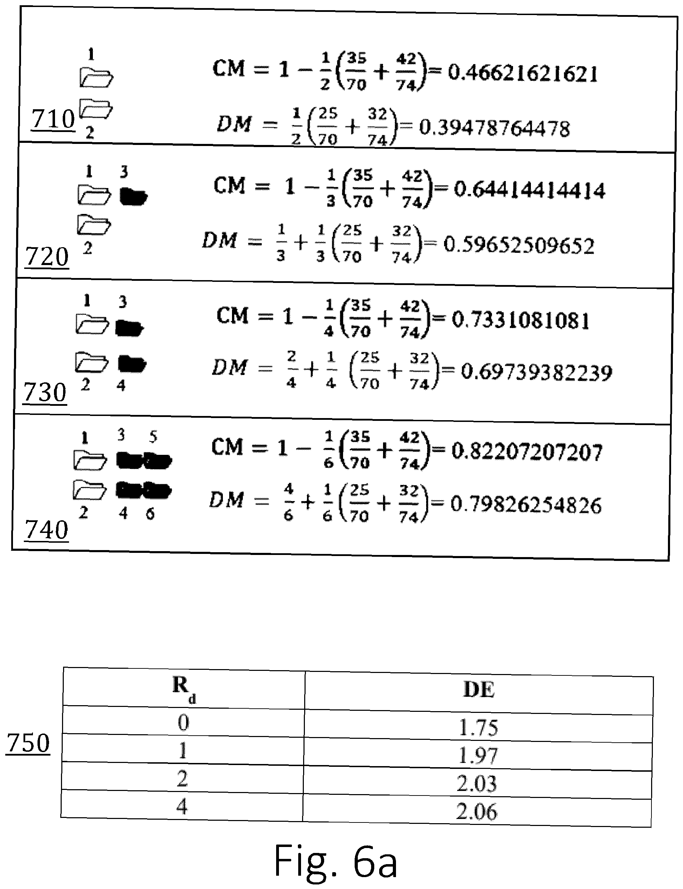

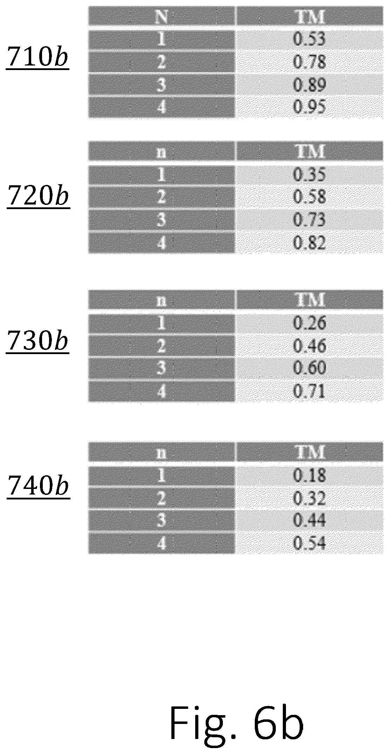

In other examples, the present invention may be implemented by calculating the deception effectiveness (DE) based on the number of decoy repositories $R_d$. In this example, $k = 1$, $R_r = 2$ and $E_{r1} = 35$, $E_{r2} = 4$, $E_{h1} = 25$ and $E_{h2} = 32$. This is shown in Figs. 6a and 6b.

As can be seen in box 610 which shows the example of where zero decoy repositories are deployed and two real data repositories are deployed, the CM and DM are 0.46621621621 and 0.39478764478, respectively. As shown in Fig. 6b in table 610b, for n = 1, the TM is calculated to be as 0.53, and for n=4, the TM is calculated to be as 0.95. As can be seen in box 620 which shows the example of one decoy repository is deployed alongside two real data repositories, the CM and DM are 0.64414414414 and 0.59652509652, respectively. As shown in Fig. 6b in table 620b, for n = 1, the TM is calculated to be as 0.35, and for n=4, the TM is calculated to be as 0.82. As can be seen in box 630 which shows the example of two decoy repository is deployed alongside two real data repositories, the CM and DM are 0.7331081081 and 0.69739382239, respectively. As shown in Fig. 6b in table 630b, for n = 1, the TM is calculated to be as 0.26, and for n=4, the TM is calculated to be as 0.71. As can be seen in box 640 which shows the example of four decoy repository is deployed alongside two real data repositories, the CM and DM are 0.82207207207 and 0.79826254826, respectively. As shown in Fig. 6b in table 640b, for n = 1, the TM is calculated to be as 0.18, and for n=4, the TM is calculated to be as 0.54.

In table 650, the DE is calculated (where $\alpha_1 = \alpha_2 = \alpha_3 = 1$ and n = 3) in terms of the number of decoy repositories. From table 650, it can be seen that the DE reduces as the number of decoy repositories $R_d$ increases. It can be observed that, for $R_d = 0$, the DE is 1.73, whereas for $R_d = 1$, the DE is 1.97, whereas for $R_d = 2$, the DE is 2.03 whereas for $R_d = 4$, the DE is 2.06. Therefore, in this example, a 4-fold increase in number of decoy repositories corresponds to less than a 10% increase in DE, whereas going from a system with zero decoy repositories to one decoy repository corresponds to approximately 20% increase in deception effectiveness. Therefore, it is clear that considerably more resources in the form of deception artefacts (such as decoy repositories) do not necessarily correspond to proportionally improved deception effectiveness. By making a calculation of the DE based on the number of deception artefacts, it can be ascertained what is a sufficiently effective level of deception given the computation resources available. Therefore, fewer resources can be utilized with a sufficiently high level of deception effectiveness. In some examples, the number of decoy repositories is limited based on a predetermined target DE.

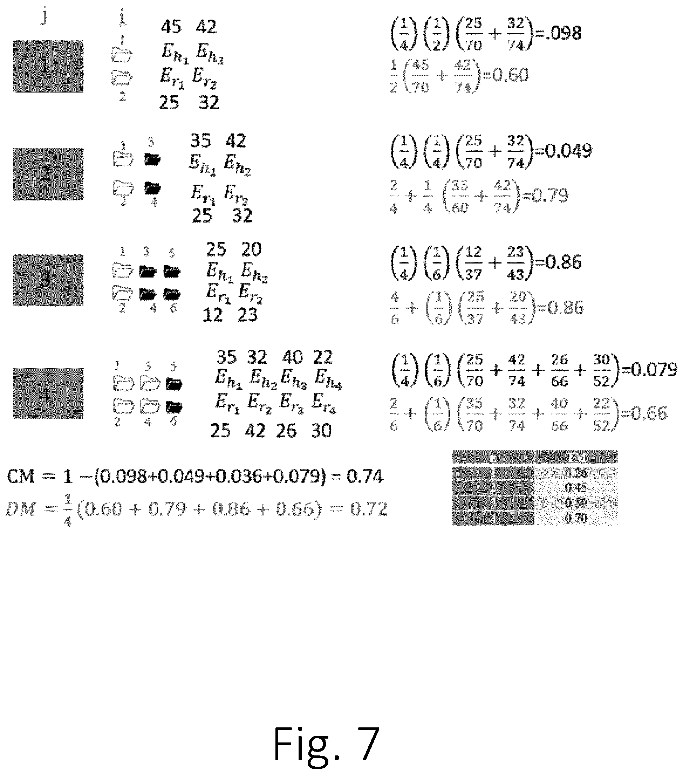

Fig. 7 shows how the deception effectiveness DE can be calculated for a network of four real assets. The CM and DM for the network of four assets is calculated as 0.74 and 0.72, respectively. The DE can be calculated based on the CM, DM and TM that are provided in Fig. 7. When $\alpha_1 = \alpha_2 = \alpha_3 = 1$ and n = 3, the DE is calculated to be 2.05. When $\alpha_1 > \alpha_2 > \alpha_3$ and n = 3, DE = 1.54. When $\alpha_1 > \alpha_2$ and $\alpha_3 = 0$ and n = 3, the DE is calculated to be 1.24. When $\alpha_1 < \alpha_2$ and $\alpha_3 = 0$, the DE is calculated to be 1.23. Therefore, by changing the values of each parameter of deception artefacts, the deception effectiveness can be improved. Advanced techniques such as machine learning or deep learning can be employed to select the optimal set of deception artefacts given the computational resources available, i.e. the deception constraints. The present invention, in some examples, is implemented using a satisfiability modulo theories (SMT) solver. SMT operates to solve a constraint satisfaction problem of finding satisfiable composition of anonymization artefacts (e.g. decoys) and diversity artefacts (such as breadcrumbs, baits and/or lures).

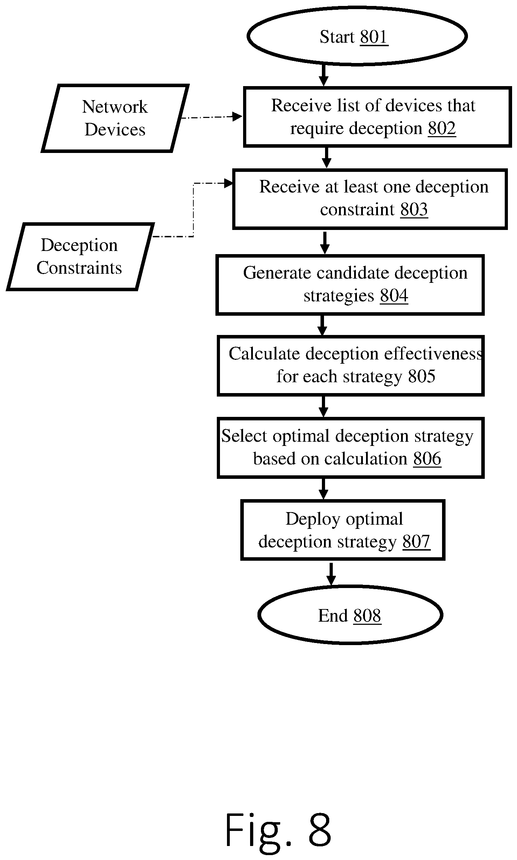

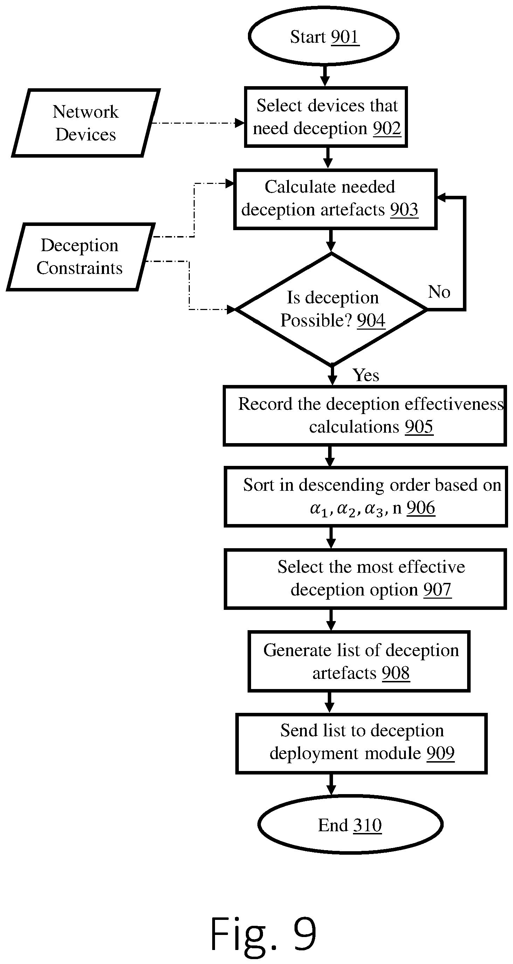

Figures 8 and 9 are flowcharts that represent exemplary implementation of deploying a cyber defence strategy in a computer network architecture.

Figure 8 represents a first exemplary method for implementing the deployment of a cyber defence strategy. The method starts 801 by accessing or receiving a list of network devices in the computer network that require deception. The list may be accessed or received 802 directly from the network devices in the computer network, or from a separate database. The method then proceeds to receive or access 803 at least one deception constraint. In some examples, the at least one deception constraint comprises an indication of computing resources available for implementing the deception strategy. Based on the list of network devices and the at least one deception strategy, a plurality of candidate deception strategies are generated 804. A deception effectiveness score is calculated 805 for each of the generated candidate deception strategies. The deception effectiveness score is a weighted sum of the concealability measure, the detectability measure and the deterrence measure.

The deception effectiveness score may be based on any or all of a concealability measure, a detectability measure and/or a deterrence measure. The score may additionally, or alternatively, be based on the computational resources available in the computer network. An optimal deception strategy from the plurality of candidate deception strategies is selected 806 based on the calculated deception effectiveness score. In some examples, each candidate deception strategy comprises a list of deception artefacts including decoys, breadcrumbs, baits and/or lures. The optimal strategy may correspond to the strategy that maximises the deception effectiveness given the available computational resources. Once the optimal deception strategy from the plurality of candidate deception strategies is selected, the optimal deception strategy is deployed 807 in the computer network.

Figure 9 represents a second exemplary method for implementing the deployment of a cyber defence strategy. The method starts 901 by selecting at least one device from a list of network devices in the computer network that requires deception. The list may be accessed or received directly from the network devices in the computer network, or from a separate database. The method proceeds to calculate 903 the needed deception artefacts. The calculation may be based on the deception constraints relating to the computer network, e.g., the type of deception artefacts that is required for the selected at least one device. The method then checks 904 whether deception is possible. Checking whether deception is possible may access or receive information relating to the deception constraints, e.g. the computational resources available. If the checks indicate that deception is not possible, then the deception artefacts are re-calculated in step 903. The subsequent calculation is performed whilst taking into consideration the deception constraints that meant deception was not possible following the previous calculation. If the checks indicate that deception is possible, the method proceeds to record 905 the deception effectiveness calculations. The deception effectiveness calculations are sorted 906 in either ascending or descending order such that the most effective deception option 907 is selected. Based on the most effective deception option, a list of deception artefacts is generated 908. The list of deception artefacts is sent 909 to a deception deployment module which is configured to deploy the deception artefacts. Insofar as embodiments of the invention described are implementable, at least in part, using a software-controlled programmable processing device, such as a microprocessor, digital signal processor or other processing device, data processing apparatus or system, it will be appreciated that a computer program for configuring a programmable device, apparatus or system to implement the foregoing described methods is envisaged as an aspect of the present invention. The computer program may be embodied as source code or undergo compilation for implementation on a processing device, apparatus or system or may be embodied as object code, for example.

Suitably, the computer program is stored on a carrier medium in machine or device readable form, for example in solid-state memory, magnetic memory such as disk or tape, optically or magneto-optically readable memory such as compact disk or digital versatile disk etc., and the processing device utilises the program or a part thereof to configure it for operation. The computer program may be supplied from a remote source embodied in a communications medium such as an electronic signal, radio frequency carrier wave or optical carrier wave. Such carrier media are also envisaged as aspects of the present invention.

It will be understood by those skilled in the art that, although the present invention has been described in relation to the above described example embodiments, the invention is not limited thereto and that there are many possible variations and modifications which fall within the scope of the invention.

The scope of the present invention includes any novel features or combination of features disclosed herein. The applicant hereby gives notice that new claims may be formulated to such features or combination of features during prosecution of this application or of any such further applications derived therefrom. In particular, with reference to the appended claims, features from dependent claims may be combined with those of the independent claims and features from respective independent claims may be combined in any appropriate manner and not merely in the specific combinations enumerated in the claims.

## Claims

1. A computer implemented method of deploying a cyber defence deception strategy in a computer network, the method comprising:

   receiving a list of network devices in the computer network that require deception;
   receiving at least one deception constraint;
   generating a plurality of candidate deception strategies based on the list of network devices and the at least one deception constraint;
   calculating a deception effectiveness score for each candidate deception strategy;
   selecting an optimal deception strategy from the plurality of candidate deception strategies based on the calculated deception effectiveness scores; and
   deploying the optimal deception strategy in the computer network.

2. The method of claim 1 wherein the deception effectiveness score is based on a concealability measure, a detectability measure, and a deterrence measure.

3. The method of claim 1 wherein the deception effectiveness score is a weighted sum of the concealability measure, the detectability measure, and the deterrence measure.

4. The method of any preceding claim wherein the deception constraint comprises an indication of computing resources available for implementing the deception strategy.

5. The method of any preceding claim wherein each candidate deception strategy comprises a list of deception artefacts comprising at least one decoy, breadcrumb, bait and/or lure.

6. The method of claim 5 wherein the decoy comprises at least one of a server, workstation, application, printer, IoT/OT/ICS, network service, mailbox, and/or active directory forest.

7. The method of claims 5 or 6 wherein the breadcrumb comprises at least one of registry entries, files and folders, memory credentials, browser history, mapped drive, and/or a credential store.

8. The method of any of claims 5 to 7 wherein a bait comprises at least one of: beaconing documents, database rows, ransomware, files and folders, DNS records, processes, directory browsing, tainted tools, fake AV, and/or listeners.

9. The method of any of claims 5 to 8 wherein a lure comprises at least one of: vulnerability, misconfigurations, default/weak credentials, weak permission, registration in catalogues.

10. A computer system including a processor and memory storing computer program code for performing the steps of any preceding claim.

11. A computer program element comprising computer program code to, when loaded into a computer system and executed thereon, cause the computer to perform the steps of a method as claimed in any of claims 1 to 9.

105 — Environment Information
106 — Deception Constraints
107 — Deception Requirements

Environment Analysis 101 → Deception Strategy 102 → Deception Deployment 103 ⇄ Deception Analysis 104

Human in the loop 108

100

# Fig. 1

Network Devices 202 | Deception Constraints 203

Deception
Effectiveness
201

Deception Artefacts 105

200

# Fig. 2

$R_r$
$(E_r + E_h)$

$R_d$

# Fig. 3

| CM | DM | TM | | |
|---|---|---|---|---|
| | | 1 | ..... | n |
| | | | | |
| | | | | |
| | | | | |
| | | | | |

# Fig. 4

**510**

$E_h = 15$

$$CM = 1 - \left(\frac{30}{45}\right) = 0.3333333$$

$$DM = \frac{15}{45} = 0.33333333333$$

| n | TM |
|---|-----|
| 1 | 0.67 |
| 2 | 0.89 |
| 3 | 0.96 |
| 4 | 0.98 |

**520**

$E_h = 30$

$$CM = 1 - \left(\frac{30}{60}\right) = 0.5$$

$$DM = \frac{30}{60} = 0.5$$

| n | TM |
|---|-----|
| 1 | 0.5 |
| 2 | 0.75 |
| 3 | 0.86 |
| 4 | 0.94 |

**530**

$E_h = 45$

$$CM = 1 - \left(\frac{30}{75}\right) = 0.6$$

$$DM = \frac{45}{75} = 0.6$$

| n | TM |
|---|-----|
| 1 | 0.4 |
| 2 | 0.64 |
| 3 | 0.78 |
| 4 | 0.87 |

**540**

$E_h = 60$

$$CM = 1 - \left(\frac{30}{90}\right) = 0.6666667$$

$$DM = \frac{60}{90} = 0.6666667$$

| n | TM |
|---|-----|
| 1 | 0.34 |
| 2 | 0.56 |
| 3 | 0.70 |
| 4 | 0.80 |

**550**

| $E_h$ | DE |
|-------|------|
| ½($E_r$) | 1.62 |
| $E_r$ | 1.86 |
| ½($E_r$)+$E_r$ | 1.98 |
| 2($E_r$) | 2.02 |

# Fig. 5

710

$$CM = 1 - \frac{1}{2}\left(\frac{35}{70} + \frac{42}{74}\right) = 0.46621621621$$

$$DM = \frac{1}{2}\left(\frac{25}{70} + \frac{32}{74}\right) = 0.39478764478$$

720

$$CM = 1 - \frac{1}{3}\left(\frac{35}{70} + \frac{42}{74}\right) = 0.64414414414$$

$$DM = \frac{1}{3} + \frac{1}{3}\left(\frac{25}{70} + \frac{32}{74}\right) = 0.59652509652$$

730

$$CM = 1 - \frac{1}{4}\left(\frac{35}{70} + \frac{42}{74}\right) = 0.7331081081$$

$$DM = \frac{2}{4} + \frac{1}{4}\left(\frac{25}{70} + \frac{32}{74}\right) = 0.69739382239$$

740

$$CM = 1 - \frac{1}{6}\left(\frac{35}{70} + \frac{42}{74}\right) = 0.82207207207$$

$$DM = \frac{4}{6} + \frac{1}{6}\left(\frac{25}{70} + \frac{32}{74}\right) = 0.79826254826$$

750

| $R_d$ | DE |
|-------|------|
| 0 | 1.75 |
| 1 | 1.97 |
| 2 | 2.03 |
| 4 | 2.06 |

Fig. 6a

710b

| N | TM |
|---|---|
| 1 | 0.53 |
| 2 | 0.78 |
| 3 | 0.89 |
| 4 | 0.95 |

720b

| n | TM |
|---|---|
| 1 | 0.35 |
| 2 | 0.58 |
| 3 | 0.73 |
| 4 | 0.82 |

730b

| n | TM |
|---|---|
| 1 | 0.26 |
| 2 | 0.46 |
| 3 | 0.60 |
| 4 | 0.71 |

740b

| n | TM |
|---|---|
| 1 | 0.18 |
| 2 | 0.32 |
| 3 | 0.44 |
| 4 | 0.54 |

Fig. 6b

$j$     $i$

**1**

     1     45   42

        $E_{h_1}$   $E_{h_2}$

        $E_{r_1}$   $E_{r_2}$

     2     25   32

$$\left(\tfrac{1}{4}\right)\left(\tfrac{1}{2}\right)\left(\tfrac{25}{70}+\tfrac{32}{74}\right)=.098$$

$$\tfrac{1}{2}\left(\tfrac{45}{70}+\tfrac{42}{74}\right)=0.60$$

**2**

     1   3    35   42

        $E_{h_1}$   $E_{h_2}$

        $E_{r_1}$   $E_{r_2}$

     2   4    25   32

$$\left(\tfrac{1}{4}\right)\left(\tfrac{1}{4}\right)\left(\tfrac{25}{70}+\tfrac{32}{74}\right)=0.049$$

$$\tfrac{2}{4}+\tfrac{1}{4}\left(\tfrac{35}{60}+\tfrac{42}{74}\right)=0.79$$

**3**

     1   3   5    25   20

        $E_{h_1}$   $E_{h_2}$

        $E_{r_1}$   $E_{r_2}$

     2   4   6    12   23

$$\left(\tfrac{1}{4}\right)\left(\tfrac{1}{6}\right)\left(\tfrac{12}{37}+\tfrac{23}{43}\right)=0.86$$

$$\tfrac{4}{6}+\left(\tfrac{1}{6}\right)\left(\tfrac{25}{37}+\tfrac{20}{43}\right)=0.86$$

**4**

     1   3   5    35   32   40   22

        $E_{h_1}$   $E_{h_2}$   $E_{h_3}$   $E_{h_4}$

        $E_{r_1}$   $E_{r_2}$   $E_{r_3}$   $E_{r_4}$

     2   4   6    25   42   26   30

$$\left(\tfrac{1}{4}\right)\left(\tfrac{1}{6}\right)\left(\tfrac{25}{70}+\tfrac{42}{74}+\tfrac{26}{66}+\tfrac{30}{52}\right)=0.079$$

$$\tfrac{2}{6}+\left(\tfrac{1}{6}\right)\left(\tfrac{35}{70}+\tfrac{32}{74}+\tfrac{40}{66}+\tfrac{22}{52}\right)=0.66$$

CM = 1 −(0.098+0.049+0.036+0.079) = 0.74

$$DM = \tfrac{1}{4}(0.60 + 0.79 + 0.86 + 0.66) = 0.72$$

| n | TM |
|---|----|
| 1 | 0.26 |
| 2 | 0.45 |
| 3 | 0.59 |
| 4 | 0.70 |

# Fig. 7

Fig. 8

Start 901

Network
Devices

Select devices that
need deception 902

Calculate needed
deception artefacts 903

Deception
Constraints

Is deception
Possible? 904

No

Yes

Record the deception effectiveness
calculations 905

Sort in descending order based on
$\alpha_1, \alpha_2, \alpha_3$, n 906

Select the most effective
deception option 907

Generate list of deception
artefacts 908

Send list to deception
deployment module 909

End 310

Fig. 9

Europäisches
Patentamt

European
Patent Office

Office européen
des brevets

# EUROPEAN SEARCH REPORT

**Application Number**

EP 23 18 1196

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/353278 A1 (STURHAN RALF [DE]) 3 November 2022 (2022-11-03) * abstract; figures 1-4 * * paragraphs [0001] - [0006] * * paragraphs [0028] - [0068] * ----- | 1-11 | INV. H04L9/40 |
| X | MENGMENG GE ET AL: "Proactive Defense for Internet-of-Things: Integrating Moving Target Defense with Cyberdeception", ARXIV.ORG, CORNELL UNIVERSITY LIBRARY, 201 OLIN LIBRARY CORNELL UNIVERSITY ITHACA, NY 14853, 8 May 2020 (2020-05-08), XP081670976, * abstract; figure 1 * * section 3.4 * * section 4 * * sections 5.2, 5.3, 5.4 * ----- | 1-11 | |
| X | DE FAVERI CRISTIANO ET AL: "Designing Adaptive Deception Strategies", 2016 IEEE INTERNATIONAL CONFERENCE ON SOFTWARE QUALITY, RELIABILITY AND SECURITY COMPANION (QRS-C), IEEE, 1 August 2016 (2016-08-01), pages 77-84, XP032969543, DOI: 10.1109/QRS-C.2016.15 [retrieved on 2016-09-21] * abstract; figures 1-3 * * section III * * section IV * * section V * * section VI * ----- | 1-11 | **TECHNICAL FIELDS SEARCHED (IPC)** H04L H04W |

The present search report has been drawn up for all claims

| Place of search | Date of completion of the search | Examiner |
|---|---|---|
| Munich | 3 November 2023 | Schossmaier, Klaus |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

 

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

**EP 23 18 1196**

This annex lists the patent family members relating to the patent documents cited in the above-mentioned European search report.
The members are as contained in the European Patent Office EDP file on
The European Patent Office is in no way liable for these particulars which are merely given for the purpose of information.

**03-11-2023**

| Patent document cited in search report | Publication date | Patent family member(s) | Publication date |
|---|---|---|---|
| US 2022353278 A1 | 03-11-2022 | DE 102021106823 B3 | 22-09-2022 |
| | | EP 4060938 A1 | 21-09-2022 |
| | | US 2022353278 A1 | 03-11-2022 |

For more details about this annex : see Official Journal of the European Patent Office, No. 12/82

EPO FORM P0459